# EUROPÄISCHE PATENTSCHRIFT

(11) **EP 3 451 022 B1**
(45) Veröffentlichungstag und Bekanntmachung des Hinweises auf die Patenterteilung: **10.04.2024**
(21) Anmeldenummer: 18189274.6
(22) Anmeldetag: 16.08.2018
(51) Int. Cl.: G01S 7/481, G01S 17/48, G01S 17/66, G01S 17/87, B60Q 3/76, B60Q 3/80, B60Q 3/82

(54) **EINRICHTUNG ZUR BEEINFLUSSUNG EINES DURCH EINE LEUCHTE MIT MINDESTENS EINER LICHTQUELLE AUSGESANDTEN LICHTKEGELS UND INNENRAUMLEUCHTE EINES KRAFTFAHRZEUGS**
DEVICE FOR INFLUENCING A CONE OF LIGHT EMITTED BY A LIGHT WITH AT LEAST ONE LIGHT SOURCE AND INTERIOR LIGHT OF A MOTOR VEHICLE
DISPOSITIF DESTINÉ À INFLUENCER UN CÔNE LUMINEUX ÉMIS À L'AIDE D'UN LUMINAIRE DOTÉ D'AU MOINS UNE SOURCE LUMINEUSE ET LUMINAIRE DE L'ESPACE INTÉRIEUR D'UN VÉHICULE AUTOMOBILE

(30) Priorität: 30.08.2017 DE 102017119916
(43) Veröffentlichungstag der Anmeldung: 06.03.2019
(73) Patentinhaber: Marelli Automotive Lighting Reutlingen (Germany) GmbH, 72762 Reutlingen (DE)
(72) Erfinder: BUCHBERGER, Christian, 72770 Reutlingen (DE); BRILL, Johannes, 70567 Stuttgart (DE)
(74) Vertreter: DREISS Patentanwälte PartG mbB

(56) Entgegenhaltungen:
- DE-A1-102012 015 039
- DE-A1-102015 205 931
- DE-A1-102016 007 120
- DE-B3- 10 251 133

## Beschreibung

Die vorliegende Erfindung betrifft eine Einrichtung zur Beeinflussung eines durch eine Leuchte mit mindestens einer Lichtquelle ausgesandten Lichtkegels nach dem Oberbegriff des Anspruchs 1.

Außerdem betrifft die Erfindung eine Innenraumleuchte für ein Kraftfahrzeug umfassend mindestens eine Lichtquelle zum Aussenden von Licht und eine Einrichtung der genannten Art zur Beeinflussung eines durch die mindestens eine Lichtquelle der Leuchte ausgesandten Lichtkegels.

Eine solche Innenraumleuchte ist bspw. aus der DE 102 51 133 B3 bekannt. Dort ist eine Innenraumleuchte mit mehreren als LEDs ausgebildeten Lichtquellen bekannt, die matrixartig angeordnet sind und Licht in verschiedene Richtungen in den von der Leuchte ausleuchtbaren Bereich aussenden. Die Leuchte verfügt über eine Sensoreinheit mit mehreren LEDs, die Licht in den ausleuchtbaren Bereich der Leuchte aussenden, und einem als Fotodiode ausgebildeten Sensor, der eine Position und eine Bewegung eines in dem ausleuchtbaren Bereich der Leuchte angeordneten Körpers erfassen kann. Der Sensor erfasst das von dem Körper reflektierte Licht und ermittelt dessen Intensität. Die LEDs der Sensoreinheit senden getaktetes Licht in unterschiedliche Detektionsbereiche aus, die in ihrer Gesamtheit im Wesentlichen den ausleuchtbaren Bereich der Leuchte abdecken. Der Sensor empfängt also getaktetes reflektiertes Licht und kann das empfangene reflektierte Licht den einzelnen LEDs der Sensoreinheit zuordnen. Wegen der hohen Frequenz der Taktung ist dies für das menschliche Auge nicht wahrnehmbar. Wenn die Intensität des von einer der LEDs der Sensoreinheit empfangenen reflektierten Lichts schwächer wird und die Intensität des von einer anderen der LEDs der Sensoreinheit empfangenen reflektierten Lichts stärker wird, kann der Sensor ermitteln, dass sich der Körper von der einen LED weg in Richtung der anderen LED bewegt. Die bekannte Leuchte verfügt ferner über eine Steuereinheit, welche die LEDs der Leuchte entsprechend der erfassten Bewegung des Körpers ansteuert, damit ein durch die LEDs erzeugter Lichtkegel der Bewegung des Körpers folgt. Aus der DE 10 2012 015039 A1 ist eine Innenraumleuchte bekannt, die von einem Sensor gesteuert wird, der eine Kamera mit einem eingebauten Fotodetektor aufweist. Aus der DE 10 2016 007 120 A1 ist eine Innenraumbeleuchtung für Kraftfahrzeuge mit Variationsmöglichkeiten bezgl. Lichtfarben und Helligkeiten bekannt.

Ausgehend von dem beschriebenen Stand der Technik liegt der vorliegenden Erfindung die Aufgabe zugrunde, die bekannte Innenraumleuchte zu verbessern.

Diese Aufgabe wird mit den Merkmalen des Anspruchs 1 gelöst.

Erfindungsgemäß wird also vorgeschlagen, nicht nur einen Sensor, sondern mehrerer Sensoren zu verwenden. Diese müssen zueinander beabstandet sein, damit eine Erfassung der Position und/oder Bewegung des Objekts in dem ausleuchtbaren Bereich der Leuchte mittels Triangulation möglich ist. Wenn die Einrichtung bspw. drei Sensoren aufweist, die an den Spitzen eines (vorzugsweise gleichschenkligen) Dreiecks angeordnet sind, und das Objekt genau unter einem der Sensoren angeordnet ist, erfasst dieser eine Sensor von dem Objekt reflektiertes bzw. gestreutes Licht mit einer höheren Intensität als die anderen beiden Sensoren. Wenn das Objekt dagegen in etwa den gleichen Abstand zu allen Sensoren hat, erfassen alle drei Sensoren von dem Objekt reflektiertes bzw. gestreutes Licht in etwa mit der gleichen Intensität.

Die erfindungsgemäße Innenraumleuchte ist bspw. als eine Leseleuchte für den Beifahrer eines Kraftfahrzeugs ausgebildet, um ihm bei Dunkelheit das Lesen eines Buchs oder einer Straßenkarte zu ermöglichen. Sie kann auf herkömmliche Art und Weise mittels eines Schalters manuell aktiviert werden, oder automatisch bei einsetzender Dunkelheit oder beim Öffnen einer Klappe (z.B. Türe, Kofferraumdeckel, Motorhaube) des Fahrzeugs. Es wäre aber auch denkbar, dass die Leuchte durch Annähern einer Hand (bspw. der des Beifahrers) aktiviert wird. Insbesondere bei Verwendung der Leuchte als Leseleuchte ist es für die Verkehrssicherheit sehr wichtig, dass der Fahrer des Kraftfahrzeugs durch das Licht der Leuchte nicht geblendet oder anderweitig irritiert wird.

Als Sensoren für die erfindungsgemäße Einrichtung kommen prinzipiell optische Sensoren, CMOS-Arrays oder sog. PIR (Passive IR)-Sensoren zum Einsatz. Aber auch andere Arten von Sensoren können eingesetzt werden, wie bspw. UV-Sensoren. Erfindungsgemäß werden jedoch Fotodioden als Sensoren eingesetzt. Die Sensoren erfassen von dem Objekt reflektiertes und/oder gestreutes Licht bzw. elektromagnetische Strahlung. Das Objekt kann bspw. mit einigen oder allen Lichtquellen der Leuchte mit sichtbarem Licht angestrahlt werden, das zur Positions- und/oder Bewegungsermittlung des Objekts von den Sensoren erfasst wird. Alternativ können auch zusätzliche separate Sensor-Licht- oder Strahlungsquellen in der Einrichtung vorgesehen sein, die nichts mit den Lichtquellen der Leuchte und der Erzeugung des Lichtkegels zu tun haben und die sichtbares Licht oder unsichtbare Strahlung (z.B. IR-, UV-Strahlung) aussenden. Besonders bevorzugt sind die Lichtquellen Halbleiterlichtquellen, insbesondere Leuchtdioden (LEDs). Dabei ist es denkbar, zumindest einige der Lichtquellen der Leuchte als Multicolor- oder RGB (red green blue)-LEDs auszugestalten. Als (virtuelle) Lichtquellen können jedoch auch die Lichtaustrittsflächen von Lichtleitern verwendet werden, welche Licht von einer oder mehreren dezentral angeordneten Lichtquellen mittels Totalreflexion herführen. Der durch die Lichtquellen der Leuchte erzeugte Lichtkegel kann durch optisch wirksame Elemente (z.B. einen Reflektor, eine Linse oder eine Vorsatzoptik in Transmissions- oder TIR-Technik) im Strahlengang variiert werden. Dabei kann jeder der Lichtquellen ein eigenes optisch wirksames Element zugeordnet sein, oder aber mehreren Lichtquellen der Leuchte, bspw. allen Lichtquellen, ist ein gemeinsames optisch wirksames Element zugeordnet.

Mittels der Intensitäten des von den einzelnen Sensoren zu einem bestimmten Zeitpunkt erfassten von dem Objekt reflektierten bzw. gestreuten Lichts wird eine Position des Objekts zu diesem Zeitpunkt mittels Triangulation ermittelt Bei Verwendung von mindestens drei Sensoren ist eine Positionsbestimmung im dreidimensionalen Raum möglich, wobei der Abstand des Objekts zu der Leuchte nur mit einer relativ großen Toleranz bestimmt werden kann. Theoretisch wäre es auch möglich, die Form und/oder Größe des Objekts zumindest näherungsweise zu ermitteln. Der von der mindestens einen Lichtquelle der Leuchte erzeugte Lichtkegel kann entsprechend ausgerichtet werden, damit er das Objekt an der ermittelten Position anleuchtet. Es wäre auch denkbar, die Größe und/oder Form des Lichtkegels auf dem Objekt zu variieren, insbesondere an die ermittelte Größe und/oder Form des Objekts anzupassen. Auf diese Weise kann sichergestellt werden, dass das Objekt möglichst vollständig angeleuchtet wird und andererseits nicht übermäßig viel Licht neben das Objekt gelangt und zu einer Blendung des Fahrers des Kraftfahrzeugs führt.

Die Lichtquellen der Leuchte können vorzugsweise einzeln oder gruppenweise angesteuert werden, um den Lichtkegel in Abhängigkeit von den Sensorsignalen zu beeinflussen. Wenn die Lichtquellen der Leuchte in unterschiedliche Teilbereiche des ausleuchtbaren Bereichs der Leuchte abstrahlen, kann durch gezieltes Aktivieren bzw. Deaktivieren (oder Dimmen) einzelner oder mehrerer Lichtquellen die Richtung des Lichtkegels variiert werden. Die Richtung des Lichtkegels könnte auch durch Bewegen eines optischen Bauteils (z.B. einer Linse) im Strahlengang des von einer oder mehreren der Lichtquellen der Leuchte ausgesandten Lichts erreicht werden. Dazu bedarf es allerdings eines elektromechanischen Aktuators (z.B. Elektromotor, Elektromagnet, Piezoaktor o.ä.) zum Bewegen des optischen Bauteils. Auch die Lichtquellen selbst könnten mit einem Aktuator bewegt bzw. ausgerichtet werden, um die Abstrahlrichtung des Lichtkegels auf die aktuelle Position des Objekts zu richten. Weitere Arten der Beeinflussung des Lichtkegels sind bspw. eine Variation der Farbe eines Teils oder des ganzen Lichtkegels, indem geeignete Multi-Color-LEDs oder RGB-LEDs entsprechend angesteuert werden.

Wenn die Einrichtung mindestens drei Sensoren aufweist, können der oder die weiteren Sensoren zur Plausibilitätsprüfung und/oder Fehlerkorrektur der Sensorsignale der anderen Sensoren verwendet werden. Alternativ ist es auch denkbar, dass mittels zumindest eines weiteren (vierten) Sensors eine Position und/oder eine Bewegung des Objekts im dreidimensionalen Raum erfasst und entsprechende Sensorsignale generiert werden. Die Lichtquellen der Leuchte können in Abhängigkeit von den Sensorsignalen angesteuert werden, um das Objekt möglichst vollständig auszuleuchten und andererseits nicht übermäßig viel Licht neben das Objekt gelangen zu lassen, um eine Blendung des Fahrers zu vermeiden. So wäre es bspw. denkbar, bei einem besonders nahe an der Leuchte angeordneten Objekt, die Intensität des Lichtkegels zu verringern.

Es wird vorgeschlagen, dass die Sensoren der Einrichtung ausgebildet sind, die Position des Objekts zu mehreren aufeinander folgenden Zeitpunkten und dadurch eine Bewegung des Objekts zu ermitteln, und entsprechende Sensorsignale zu generieren, und dass die Mittel zur Beeinflussung des ausgesandten Lichtkegels ausgebildet sind, den Lichtkegel der ermittelten Bewegung des Objekts folgen zu lassen. Durch eine zeitliche Variation der Intensitäten des von den einzelnen Sensoren erfassten von dem Objekt reflektierten bzw. gestreuten Lichts kann eine Bewegung des Objekts ermittelt und nachverfolgt werden. Die Lichtquellen der Leuchte können entsprechend angesteuert werden, damit der Lichtkegel der Bewegung des Objekts folgt. Eine Bewegung des Lichtkegels kann bspw. dadurch erzielt werden, dass die Lichtquellen der Leuchte Licht in unterschiedliche Richtungen aussenden und diejenigen LEDs (voll oder gedimmt) aktiviert werden, in deren Richtung der Lichtkegel gerichtet werden soll. Alternativ oder zusätzlich ist es auch denkbar, ein im Strahlengang angeordnetes optische wirksames Element oder die Lichtquellen selbst mittels Aktuatoren zu bewegen und so die Richtung des Lichtkegels zu beeinflussen.

Gemäß einer vorteilhaften Weiterbildung der vorliegenden Erfindung wird vorgeschlagen, dass der Einrichtung mindestens eine Lichtquelle zum Aussenden von Licht in einem für das menschliche Auge sichtbaren Wellenlängenbereich zugeordnet ist, wobei die mindestens eine Lichtquelle Licht in den durch die Leuchte ausleuchtbaren Bereich aussendet, und jeder der Sensoren ausgebildet ist, das von dem Objekt reflektierte oder gestreute sichtbare Licht zu erfassen, die Intensität des erfassten Lichts zu ermitteln, auszuwerten und entsprechende Sensorsignale zu generieren. Vorteilhafterweise ist die der Einrichtung zugeordnete mindestens eine Lichtquelle Teil der Leuchte, die zumindest einen Teil des Lichtkegels der Leuchte in den durch die Leuchte ausleuchtbaren Bereich aussendet.

Gemäß einer bevorzugten Ausführungsform der Erfindung wird vorgeschlagen, dass die der Einrichtung zugeordnete mindestens eine Lichtquelle während ihres Ausleuchtmodus, in dem sie zur Erzeugung zumindest einen Teil des Lichtkegels der Leuchte zur Verfügung steht, zu bestimmten Zeitpunkten für eine kurze Zeitdauer in einem Sensormodus betreibbar ist, in dem sie mit einer für das menschliche Auge nicht wahrnehmbaren Frequenz Lichtpulse aussendet, und dass die Sensoren ausgebildet sind, die Intensität der von dem Objekt reflektierten oder gestreuten Lichtpulse zu erfassen, auszuwerten, den jeweiligen sendenden Lichtquellen zuzuordnen und entsprechende Sensorsignale zu generieren. In dem sog. Ausleuchtmodus kann die Lichtquelle bei entsprechender Ansteuerung zumindest einen Teil des Lichtkegels der Leuchte erzeugen. Bspw. in regelmäßigen Abständen kann die Lichtquelle in den Sensormodus umgeschaltet werden, in dem sie mit einer vom menschlichen Auge nicht wahrnehmbaren Frequenz (z.B. 433 Hz) Lichtpulse in den ausleuchtbaren Bereich der Leuchte aussendet. Wenn dieses Licht auf das Objekt trifft, werden die Lichtpulse von dem Objekt reflektiert und/oder gestreut und von den Sensoren erfasst. Die Sensoren können das Signal aufgrund der Frequenz der Lichtpulse einer bestimmten Lichtquelle eindeutig zuordnen.

Wenn die Lichtquellen der Leuchte als LEDs ausgebildet sind und mittels PWM (Pulsweitenmodulation mit Impulsdauer und Periodendauer) gedimmt werden, sind die Lichtquellen in jeder Periode nach dem Impuls für eine gewisse Zeitdauer (= Periodendauer - Impulsdauer) inaktiv. Dies geschieht sehr schnell und ist für das menschliche Auge deshalb nicht sichtbar. Dennoch könnte diese inaktive Zeitdauer der LEDs dazu genutzt werden, die LEDs in den Sensormodus zu schalten und sie zum Aussenden von Lichtpulsen mit einer bestimmten Frequenz zu veranlassen, der Reflexionen bzw. Streuungen an einem Objekt dann zum Erfassen der Position und/oder Bewegung des Objekts von den Sensoren erfasst werden können. Wenn die einzelnen LEDs die Lichtpulse zudem mit einer individuellen Frequenz aussenden, können die Sensoren die empfangenen Signale auch eindeutig den einzelnen LEDs zuordnen, da die Signale der einzelnen LEDs - zumindest nach einer Frequenzfilterung - ebenfalls die charakteristische Frequenz, mit der die Lichtpulse ausgesandte wurden, aufweisen.

Des Weiteren wird vorgeschlagen, dass die Einrichtung mindestens eine Strahlungsquelle zum Aussenden von elektromagnetischer Strahlung in einem für das menschliche Auge unsichtbaren Wellenlängenbereich aufweist, wobei die mindestens eine Strahlungsquelle die Strahlung in den durch die Leuchte ausleuchtbaren Bereich aussendet, und jeder der Sensoren ausgebildet ist, die von dem Objekt reflektierte oder gestreute unsichtbare Strahlung zu erfassen, die Intensität der erfassten Strahlung zu ermitteln, auszuwerten und entsprechende Sensorsignale zu generieren. Wenn den Sensoren Strahlungsquellen zugeordnet sind, die unsichtbare Strahlung aussenden, deren Reflexionen und Streuungen an dem Objekt von den Sensoren erfasst werden können, hat dies den Vorteil, dass die Position und/oder Bewegung des Objekts kontinuierlich ermittelt werden kann, ohne dass dies das Anstrahlen oder Ausleuchten des Objekts mit sichtbarem Licht stören oder beeinträchtigen würde. Auch der Fahrer des Kraftfahrzeugs wird durch die unsichtbare Strahlung nicht gestört. Die unsichtbare Strahlung kann bspw. IR-, oder UV-Strahlung sein. Die Sensoren müssten dann für die entsprechende Strahlung empfindlich ausgebildet sein.

Des Weiteren wird vorgeschlagen, dass die Sensoren der Einrichtung ausgebildet sind, die Form und/oder Größe des Objekts zu ermitteln und entsprechende Sensorsignale zu generieren, und dass die Mittel zur Beeinflussung des ausgesandten Lichtkegels ausgebildet sind, die Form und/oder Größe des Lichtkegels auf dem ausgeleuchteten Objekt so einzustellen, dass der Lichtkegel das Objekt möglichst exakt ausleuchtet. Besonders bevorzugt ist es, wenn die Sensoren der Einrichtung ausgebildet sind, die Form und/oder Größe des Objekts zu mehreren aufeinander folgenden Zeitpunkten zu ermitteln und entsprechende Sensorsignale zu generieren, und dass die Mittel zur Beeinflussung des ausgesandten Lichtkegels ausgebildet sind, die Form und/oder Größe des Lichtkegels der ermittelten Form und/oder Größe des Objekts folgen zu lassen. Auf diese Weise kann die Größe und/oder Form des Lichtkegels dynamisch angepasst werden. Wenn der Beifahrer bspw. sein Buch weiter von der Lichtquelle weg hält, kann der Lichtkegel entsprechend schmal realisiert werden, wenn das Buch jedoch näher an die Leuchte heranbewegt wird, muss der Lichtkegel aufgeweitet werden, damit das gesamte Buch noch ausgeleuchtet wird. Entsprechendes gilt bspw. für den Fall, dass das Buch bezüglich der Leuchte schräg gehalten wird, wodurch sich die effektive von der Leuchte auszuleuchtende Fläche bzw. deren Form verändert. Die Form des Lichtkegels könnte entsprechend variiert werden.

Erfindungsgemäß wird vorgeschlagen, dass mindestens eine Lichtquelle der Leuchte ausgebildet ist, je nach Ansteuerung der mindestens einen Lichtquelle Licht unterschiedlicher Farben auszusenden, und dass die Mittel zur Beeinflussung des ausgesandten Lichtkegels in Abhängigkeit von dem mindestens einen Sensorsignal ausgebildet sind, die mindestens eine Lichtquelle anzusteuern, damit sie Licht einer bestimmten Farbe aussendet. Zur Beeinflussung des Lichtkegels der Leuchte kann nicht nur dessen Richtung, Größe und/oder Form variiert werden, sondern es kann auch die Farbe des zumindest von einigen der Lichtquellen der Leuchte ausgesandten Lichts variiert werden. So wäre es bspw. denkbar, im Zentrum des Lichtkegels weißes Licht und am Rand eher farbiges Licht, bspw. gelbes oder rötliches Licht, zu verwenden. Die Übergänge zwischen dem weißen Zentrum und dem farbigen Rand des Lichtkegels können fließend sein.

Gemäß einer weiteren bevorzugten Ausführungsform der Erfindung wird vorgeschlagen, dass mindestens eine Lichtquelle der Leuchte ausgebildet ist, je nach Ansteuerung der mindestens einen Lichtquelle Licht unterschiedlicher Intensitäten auszusenden, und dass die Mittel zur Beeinflussung des ausgesandten Lichtkegels in Abhängigkeit von dem mindestens einen Sensorsignal ausgebildet sind, die mindestens eine Lichtquelle anzusteuern, damit sie Licht einer bestimmten Intensität aussendet. In diesem Sinne ist es bspw. denkbar, im Zentrum des Lichtkegels besonders helles Licht mit großer Intensität und am Rand Licht mit geringerer Intensität zu verwenden. Die Übergänge zwischen dem Licht hoher Intensität im Zentrum des Lichtkegels und dem Licht mit geringer Intensität am Rand können fließend sein.

Schließlich wird vorgeschlagen, dass die Leuchte mehrere Lichtquellen aufweist, die ausgebildet sind, zur Bestimmung der Position des Objekts in dem ausleuchtbaren Bereich der Leuchte nacheinander einzeln oder gruppenweise kurzzeitig Licht auszusenden und die Sensoren ausgebildet sind, korrelliert zu dem Aussenden des Lichts durch die einzelnen Lichtquellen das von dem Objekt jeweils reflektierte oder gestreute Licht zu erfassen, auszuwerten und entsprechende Sensorsignale zu generieren. Es wäre bspw. denkbar, unmittelbar nach dem Einschalten der Leuchte eine Art Initialisierungsschritt auszuführen, in dem nacheinander alle Lichtquellen der Leuchte kurzzeitig Licht aussenden, dessen Reflexionen und Streuungen an dem Objekt von den Sensoren erfasst und ausgewertet werden.

Weitere Merkmale und Vorteile der vorliegenden Erfindung werden nachfolgend unter Bezugnahme auf die Figuren näher erläutert. Es zeigen:
Fig. 1 eine erste beispielhafte Ausgestaltung einer erfindungsgemäßen Innenraumleuchte in einer Draufsicht;
Fig. 2 eine weitere beispielhafte Ausgestaltung einer erfindungsgemäßen Innenraumleuchte in einer Draufsicht;
Fig. 3 eine schematische dreidimensionale Darstellung von Sensorbereichen der Sensoren der Innenraumleuchte aus Fig. 1;
Fig. 4 eine schematische dreidimensionale Darstellung von Ausleuchtbereichen ausgewählter Lichtquellen der Innenraumleuchte aus Fig. 1;
Fig. 5 eine Schnittansicht durch die Innenraumleuchte aus Fig. 1; und
Fig. 6 eine weitere Schnittansicht durch die Innenraumleuchte aus Fig. 1.

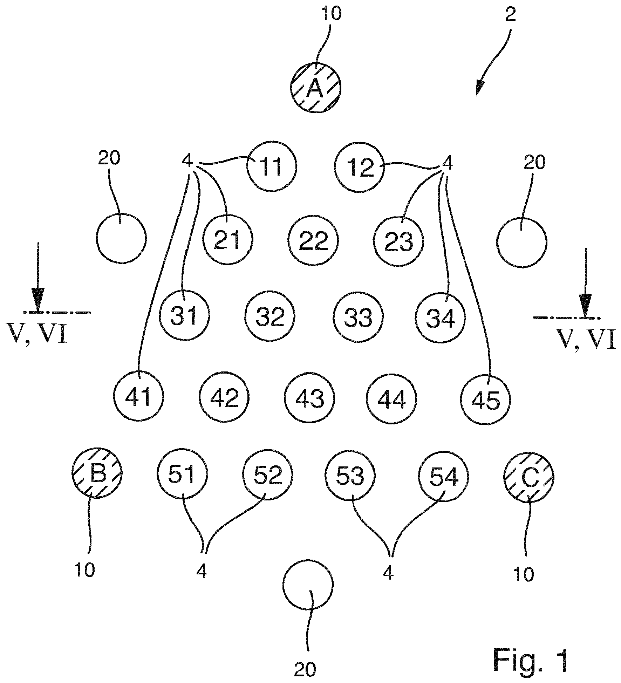

In Figur 1 ist eine Draufsicht auf eine beispielhafte Innenraumleuchte für ein Kraftfahrzeug gezeigt. Die Leuchte ist in ihrer Gesamtheit mit dem Bezugszeichen 2 bezeichnet. Die Leuchte 2 umfasst mehrere matrixartig angeordnete Lichtquellen 4, die in diesem Beispiel als LEDs ausgebildet sind, die weißes Licht aussenden. Die Lichtquellen 4 könnten jedoch auch beliebig anders ausgebildet sein, bspw. als kleine Glühbirnen, RGB-LEDs, die Licht unterschiedlicher Farbe aussenden können, oder als Austrittsflächen von Lichtleitern, über die Licht von einer entfernt angeordneten Lichtquelle zu den Austrittsflächen geleitet wird. Die einzelnen LEDs 4 sind jeweils mit einer zweistelligen Zahl bezeichnet, wobei die erste Ziffer für die Zeile steht, in der die LED 4 angeordnet ist, und die zweite Ziffer für die Position der LED 4 innerhalb der jeweiligen Zeile.

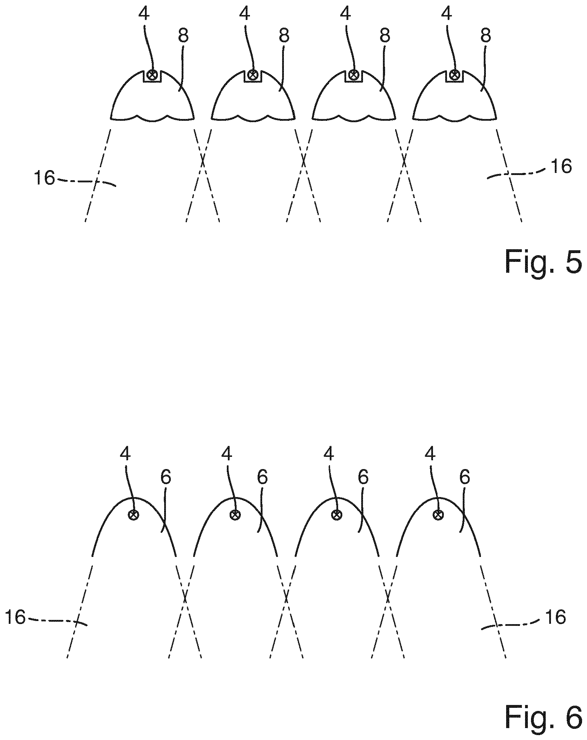

Die Lichtquellen 4 können einzeln oder gruppenweise angesteuert werden. Die Ansteuerung umfasst sowohl ein Ein- oder Ausschalten als auch ein Dimmen der Lichtquellen 4. Bei einer mehrfarbigen Lichtquelle 4 umfasst das Ansteuern auch das Aussenden von Licht einer vorgegebenen Farbe durch die Lichtquelle 4. Im Strahlengang des von den Lichtquellen 4 ausgesandten Lichts können Bündelungsoptiken vorgesehen sein, die bspw. als Reflektoren 6 (vgl. Figur 6), Linsen oder Vorsatzoptiken 8 (vgl. Figur 5) ausgebildet sein können. Es ist auch denkbar, dass eine gemeinsame Bündelungsoptik, bspw. in Form einer Linse, mehreren Lichtquellen 4 zugeordnet ist. Das von einer oder mehreren der Lichtquellen 4 ausgesandte Licht bildet einen Lichtkegel der Leuchte 2, der zum Ausleuchten zumindest eines Teils eines durch die Leuchte 2 ausleuchtbaren Bereichs unterhalb der Leuchte 2 im Inneren des Kraftfahrzeugs dient. In diesem Sinne ist die Leuchte 2 bspw. als eine Leseleuchte ausgebildet, die im Dachhimmel des Kraftfahrzeugs angeordnet ist und einen Lichtkegel mit Licht zum Lesen eines Buches oder einer Straßenkarte aussendet. Dabei ist es eine Besonderheit der Leuchte 2, dass eine Position und Bewegung des auszuleuchtenden Objekts erfasst wird und die Form, Größe und Ausrichtung des Lichtkegels sowie die Farbe des ausgesandten Lichts beeinflusst werden kann, um eine optimale Ausleuchtung selbst eines sich bewegenden Objekts zu ermöglichen, ohne dass der Fahrer des Kraftfahrzeugs geblendet wird.

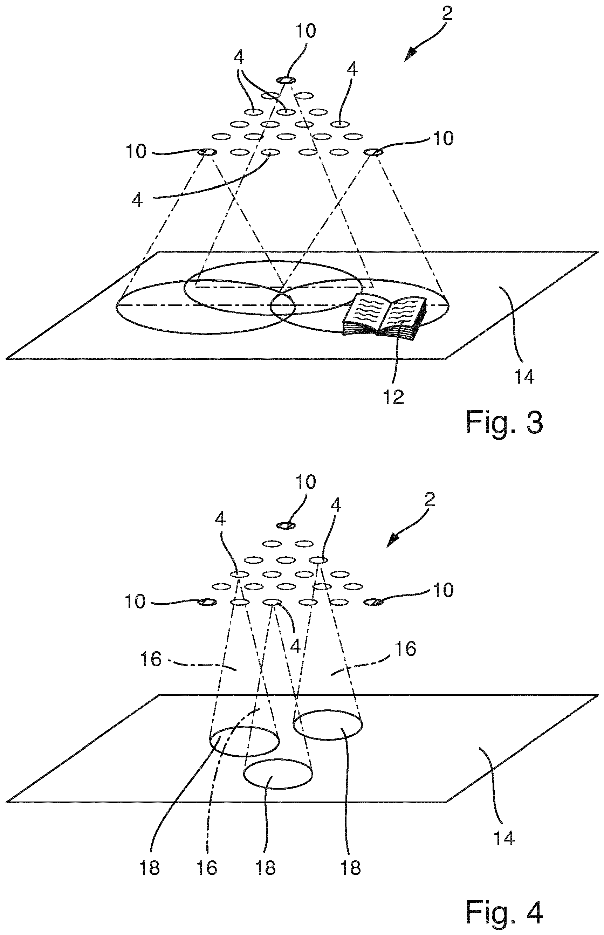

Die Leuchte 2 weist eine Einrichtung zur Beeinflussung des durch die mindestens eine Lichtquelle 4 der Leuchte 2 ausgesandten Lichtkegels auf. Die Einrichtung umfasst mehrere zueinander beabstandete Sensoren 10 zum Erfassen der Position des auszuleuchtenden Objekts 12 (vgl. Figur 3) in dem durch die Leuchte ausleuchtbaren Bereich 14 und zur Generierung mindestens eines Sensorsignals in Abhängigkeit von der erfassten Position des Objekts 12. In den Figuren 1 und 3 sind die Sensoren 10 an den Ecken eines Dreiecks angeordnet. Das Dreieck ist vorzugsweise ein gleichseitiges Dreieck. Zwischen den Sensoren 10 und im Inneren des Dreiecks sind die Lichtquellen 4 angeordnet. In Figur 3 ist das Objekt 12 beispielhaft als ein Buch gezeigt. Die Sensoren 10 sind jeweils als eine Fotodiode ausgebildet. Die Sensoren 10 erfassen jeweils eine Intensität der von dem Objekt reflektierten oder gestreuten elektromagnetischen Strahlung. Diese Strahlung kann für das menschliche Auge sichtbares Licht oder eine beliebige unsichtbare Strahlung (z.B. IR- oder UV-Strahlung) sein. In dem Beispiel der Figur 3 wird beispielsweise der Sensor 'C' (vgl. Figur 1) reflektierte oder gestreute Strahlung mit höherer Intensität erfassen als die anderen beiden Sensoren 'A' und 'B'. Die Sensoren 10 werten die jeweils empfangenen Intensitäten aus und generieren entsprechende Sensorsignale. Anhand der Sensorsignale der verschiedenen Sensoren 10 ermitteln die Sensoren 10 dann die Position des Objekts 12 mittels Triangulation.

Es wird vorgeschlagen, dass die Sensoren 10 der Einrichtung ausgebildet sind, die Position des Objekts 12 zu mehreren aufeinander folgenden Zeitpunkten und dadurch eine Bewegung des Objekts 12 zu ermitteln, und entsprechende Sensorsignale zu generieren. Die Mittel zur Beeinflussung des ausgesandten Lichtkegels der Leuchte 2 sind ausgebildet, den Lichtkegel der ermittelten Bewegung des Objekts 12 folgen zu lassen, so dass das Objekt 12 immer optimal ausgeleuchtet wird. Vorzugsweise wird der Lichtkegel der Leuchte 2 einer Bewegung des Objekts 12 in Echtzeit nachgeführt. In einer nicht erfindungsgemäßen Ausführungsform wäre es außerdem denkbar, dass die Sensoren 10 der Einrichtung ausgebildet sind, die Form und/oder Größe des Objekts 12 zu ermitteln und entsprechende Sensorsignale zu generieren. Dies wäre bspw. ohne weiteres möglich, wenn die Sensoren 10 mindestens eine Kamera aufweisen würden, aus deren Sensorsignal mittels Bildverarbeitung die Form und Größe des Objekts 12 ermittelt werden könnte. Die Mittel zur Beeinflussung des ausgesandten Lichtkegels könnten dann ausgebildet sein, die Form und/oder Größe des Lichtkegels der Leuchte 2 auf dem ausgeleuchteten Objekt 12 so einzustellen, dass der Lichtkegel das Objekt 12 möglichst exakt ausleuchtet. Insbesondere könnte die Kontur des Lichtkegels der Leuchte 2 auf dem Objekt 12 der Kontur des Objekts 12 entsprechen, so dass kaum Licht neben das Objekt 12 trifft. Dadurch kann eine Blendung des Fahrers des Kraftfahrzeugs weiter vermindert werden. Schließlich wäre es denkbar, dass die Sensoren 10 der Einrichtung ausgebildet sind, die Form und/oder Größe des Objekts 12 zu mehreren aufeinander folgenden Zeitpunkten zu ermitteln und entsprechende Sensorsignale zu generieren. Die Mittel zur Beeinflussung des ausgesandten Lichtkegels der Leuchte 2 könnten dann ausgebildet sein, die Form und/oder Größe des Lichtkegels der Leuchte 2 dynamisch zu variieren und der ermittelten Form und/oder Größe des Objekts 12 folgen zu lassen.

Außerdem umfasst die Einrichtung Mittel zur Beeinflussung des von der Leuchte 2 ausgesandten Lichtkegels in Abhängigkeit von dem mindestens einen Sensorsignal. In Figur 4 ist beispielhaft anhand der Lichtquellen '23', '31' und '52' (vgl. Figur 1) gezeigt, dass jede der Lichtquellen 4 einen eigenen Teil-Lichtkegel 16 erzeugt, der einen bestimmten Abschnitt 18 des ausleuchtbaren Bereichs 14 ausleuchtet. Der von der Leuchte 2 ausgesandte Lichtkegel kann in seiner Richtung dadurch beeinflusst werden, dass jeweils eine oder mehrere ausgewählte Lichtquellen 4 aktiviert werden, so dass deren Teil-Lichtkegel 16 den Lichtkegel der Leuchte 2 ergeben und einen bestimmten Abschnitt 18 ausleuchten, vorzugsweise einen Abschnitt 18, in dem sich das auszuleuchtende Objekt 12 befindet.

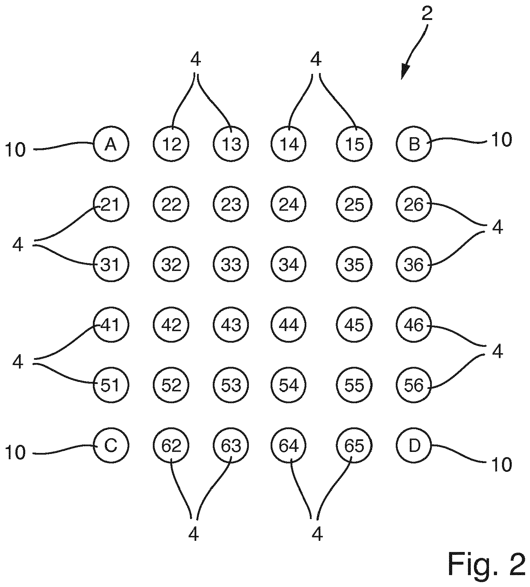

In dem Beispiel der Figuren 1, 3 und 4 verfügt die Einrichtung über drei Sensoren 10. Mit diesen kann die Position des Objekts 12 im zweidimensionalen Raum ermittelt werden. Mit Hilfe eines vierten Sensors 'D' (vgl. Figur 2) kann die Plausibilität der Sensorsignale der anderen drei Sensoren 'A', 'B' und 'C' geprüft werden oder eine Fehlerkorrektur der Sensorsignale vorgenommen werden. Alternativ kann der vierte Sensor 'D' auch dazu genutzt werden, die Position des Objekts 12 im dreidimensionalen Raum, also zusätzlich noch den Abstand des Objekts 12 von den Sensoren 10 bzw. der Leuchte 2, ermittelt werden. Durch die Verwendung von wechselbaren Filtern, z.B. Farbfiltern, können die Messmöglichkeiten der Sensoren 10 zusätzlich erweitert werden.

In den bisher geschilderten Beispielen arbeitet die Einrichtung der Leuchte 2 ausschließlich mit sichtbarem Licht, das von einer oder mehreren der Lichtquellen 4 in Richtung des Objekts 12 ausgesandt, von diesem reflektiert oder gestreut und von den Sensoren 10 erfasst wird. Selbstverständlich wäre es auch denkbar, dass zusätzlich zu den Lichtquellen 4 weitere Strahlungsquellen 20 vorgesehen sind (vgl. Figur 1), die elektromagnetische Strahlung, bspw. in Form unsichtbarer IR- oder UV-Strahlung, in den auszuleuchtenden Bereich 14 aussenden. Diese Strahlung wird von dem Objekt 12 reflektiert oder gestreut und von den Sensoren 10 erfasst. In diesem Fall sind die Sensoren 10 ausgebildet, die entsprechende elektromagnetische Strahlung zu erfassen, und sind bspw. als IR-Sensoren oder UV-Sensoren ausgebildet.

In den bisher beschriebenen Beispielen sind die Sensoren 10 Teil der Leuchte 2 und in der Nähe der Lichtquellen 4 angeordnet. Selbstverständlich können die Sensoren 10 auch an einer beliebig anderen Position im Fahrzeug angeordnet sein. Voraussetzung für ihre Anordnung ist, dass sie die Position des Objekts 12 sicher und zuverlässig erfassen können. Auch die Lichtquellen 4 müssen nicht unbedingt zu der Leuchteneinheit zusammengefasst sein. Es wäre auch denkbar, dass die Lichtquellen 4 verteilt im Kraftfahrzeug angeordnet sind.

Es wäre bspw. denkbar, unmittelbar nach dem Einschalten der Leuchte 2 eine Art Initialisierungsschritt auszuführen, in dem nacheinander alle Lichtquellen 4 der Leuchte 2 kurzzeitig Licht aussenden, dessen Reflexionen und Streuungen an dem Objekt 12 von den Sensoren 10 korreliert erfasst und dann ausgewertet werden. Ebenso wäre es denkbar, dass bestimmte ausgewählte Lichtquellen 4, bspw. die Lichtquellen '11' und '12' für Sensor 'A', bei einer bestimmten, für das menschliche Auge nicht wahrnehmbaren, weil hohen Frequenz betrieben werden und mit dieser Frequenz Lichtpulse aussenden, so dass eine eindeutige Korrelation zwischen der sendenden Lichtquelle 4 und den empfangenden Sensoren 10 getroffen werden kann. Dabei werden die Lichtquellen 4 vorzugsweise mit unterschiedlichen Frequenzen betrieben, bspw. 433 Hz, 517 Hz und 589 Hz. Die von den Sensoren 10 empfangenen Signale werden über Bandpassfilter geführt, so dass jeder der Sensoren genau die Intensität des von den jeweiligen Lichtquellen 4 ausgesandten Strahlungssignals ermitteln kann. Die empfangenen Intensitäten können also den verschiedenen Lichtquellen 4 zugeordnet werden. Da die Position der Lichtquellen 4 zu den Sensoren 10 bekannt ist, kann mittels Triangulation die Position und/oder Bewegung des Objekts 12 ermittelt werden. In Verbindung mit den wechselbaren Filtern ergeben sich weitere Möglichkeiten. So könnte bspw. erkannt werden, welche Farbe wo reflektiert wird. Mit den Filtern können alle oder nur ein Teil der Sensoren 10 ausgestattet sein.

In einer anderen Variante können die Sensoren 10 für eine für das menschliche Auge nicht sichtbare Wellenlänge (z.B. IR oder UV) sensibel sein und der ausleuchtbare Bereich 14 mit einer entsprechenden Strahlungsquelle 20 permanent ausgeleuchtet sein, was eine präzisere Detektion des Objekts 12 ermöglicht.

Erfindungsgemäß werden mehrfarbige Lichtquellen 4, bspw. in Form von RGB-LEDs eingesetzt, und das erfasste Objekt 12 wird mit einer anderen Farbe angestrahlt, bzw. ausgeleuchtet als die anderen Teile des ausleuchtbaren Bereichs 14. Erfindungsgemäß wird das Objekt 12 mit weißem Licht beleuchtet und die Umgebung mit weniger starkem rotem oder gelbem Licht ausgeleuchtet. Auf diese Weise kann eine Blendung des Fahrers des Kraftfahrzeugs zuverlässig vermieden werden und gleichzeitig kann das Objekt 12 im weißen Licht von einem Beifahrer gut erkannt werden.

Zusammenfassend betrifft die Erfindung also eine Innenraumleuchte 2 eines Kraftfahrzeugs, die mindestens zwei einzeln ansteuerbare (ein-, ausschaltbare und dimmbare) Lichtquellen 4 in linearer oder beliebiger zweidimensionaler oder auch dreidimensionaler Geometrie umfasst, deren Teil-Lichtkegel 16 einen festgelegten Abschnitt 18 des ausleuchtbaren Bereichs 14 ausleuchten, wobei alle Teil-Lichtkegel 16 zusammen den gesamten ausleuchtbaren Bereich 14 ausleuchten. Durch entsprechende Optiken 6, 8, die den Lichtquellen 4 zugeordnet sind, kann erreicht werden, dass jede einzelne Lichtquelle 4 einen Teil-Lichtkegel 16 mit einem ausgeprägten Maximum in einem zentralen Beleuchtungsbereich erzeugt und die von den anderen Lichtquellen 4 ausgeleuchteten Abschnitte 18 weniger intensiv beleuchtet.

## Patentansprüche

1. Einrichtung mit einer Leuchte (2) mit mindestens einer Lichtquelle (4), wobei die Einrichtung zur Beeinflussung eines durch die mindestens eine Lichtquelle (4) der Leuchte (2) ausgesandten Lichtkegels eingerichtet ist, die Einrichtung umfassend mindestens einen Sensor (10) zum Erfassen einer von einem Objekt (12) in einem durch die Leuchte (2) ausleuchtbaren Bereich (14) reflektierten oder gestreuten elektromagnetischen Strahlung mindestens einer Licht- oder Strahlungsquelle (4, 20) der Einrichtung und zur Generierung mindestens eines Sensorsignals in Abhängigkeit von der erfassten reflektierten Strahlung des Objekts (12), und Mittel zur Beeinflussung des ausgesandten Lichtkegels in Abhängigkeit von dem mindestens einen Sensorsignal, wobei die Einrichtung mehrere zueinander beabstandete Fotodioden als Sensoren (10) aufweist, welche jeweils eine Intensität der von dem Objekt (12) reflektierten oder gestreuten elektromagnetischen Strahlung erfassen, auswerten und entsprechende Sensorsignale generieren, und wobei die Einrichtung anhand der Sensorsignale der verschiedenen Sensoren (10) die Position des Objekts (12) mittels Triangulation ermittelt **dadurch gekennzeichnet, dass** die mindestens eine Lichtquelle (4) der Leuchte (2) ausgebildet ist, je nach Ansteuerung der mindestens einen Lichtquelle (4) Licht unterschiedlicher Farben auszusenden, und dass die Mittel zur Beeinflussung des ausgesandten Lichtkegels in Abhängigkeit von dem mindestens einen Sensorsignal ausgebildet sind, die mindestens eine Lichtquelle (4) anzusteuern, damit sie Licht einer bestimmten Farbe aussendet, wobei die Einrichtung dazu eingerichtet ist, das erfasste Objekt (12) mit weißem Licht zu beleuchten und die Umgebung mit weniger starkem rotem oder gelbem Licht auszuleuchten.

2. Einrichtung nach Anspruch 1, **dadurch gekennzeichnet, dass** der Einrichtung mindestens eine Lichtquelle (4) zum Aussenden von Licht in einem für das menschliche Auge sichtbaren Wellenlängenbereich als die mindestens eine Licht- oder Strahlungsquelle (4, 20) zugeordnet ist,
wobei die mindestens eine Lichtquelle (4) Licht in den durch die Leuchte (2) ausleuchtbaren Bereich (14) aussendet, und jeder der Sensoren (10) ausgebildet ist, das von dem Objekt (12) reflektierte oder gestreute sichtbare Licht zu erfassen, die Intensität des erfassten Lichts zu ermitteln, auszuwerten und damit die entsprechenden Sensorsignale zu generieren.

3. Einrichtung nach Anspruch 2, **dadurch gekennzeichnet, dass** die der Einrichtung zugeordnete mindestens eine Lichtquelle (4) Teil der Leuchte (2) ist und zumindest einen Teil (16) des Lichtkegels der Leuchte (2) in den durch die Leuchte (2) ausleuchtbaren Bereich (14) aussendet.

4. Einrichtung nach Anspruch 3, **dadurch gekennzeichnet, dass** die der Einrichtung zugeordnete mindestens eine Lichtquelle (4) während ihres Ausleuchtmodus, in dem sie zumindest einen Teil (16) des Lichtkegels der Leuchte (2) erzeugt, zu bestimmten Zeitpunkten für eine kurze Zeitdauer in einem Sensormodus betreibbar ist, in dem sie mit einer für das menschliche Auge nicht wahrnehmbaren Frequenz Lichtpulse aussendet, und dass die Sensoren (10) ausgebildet sind, die Intensität der von dem Objekt (12) reflektierten oder gestreuten Lichtpulse zu erfassen, auszuwerten, der aussendenden Lichtquelle (4) zuzuordnen und damit die entsprechenden Sensorsignale zu generieren.

5. Einrichtung nach Anspruch 1, **dadurch gekennzeichnet, dass** die Einrichtung mindestens eine Strahlungsquelle (20) zum Aussenden von elektromagnetischer Strahlung in einem für das menschliche Auge unsichtbaren Wellenlängenbereich als die mindestens eine Licht- oder Strahlungsquelle (4, 20) aufweist, wobei die mindestens eine Strahlungsquelle (20) die Strahlung in den durch die Leuchte (2) ausleuchtbaren Bereich (14) aussendet, und jeder der Sensoren (10) ausgebildet ist, die von dem Objekt (12) reflektierte oder gestreute unsichtbare Strahlung zu erfassen, die Intensität der erfassten Strahlung zu ermitteln, auszuwerten und damit die entsprechenden Sensorsignale zu generieren.

6. Einrichtung nach Anspruch 5, **dadurch gekennzeichnet, dass** die mindestens eine Strahlungsquelle (20) ausgebildet ist, IR- oder UV-Strahlung auszusenden.

7. Einrichtung nach einem der Ansprüche 1 bis 6, **dadurch gekennzeichnet, dass** die Einrichtung mindestens drei zueinander beabstandete Sensoren (10) aufweist.

8. Einrichtung nach einem der Ansprüche 1 bis 6, **dadurch gekennzeichnet, dass** die Einrichtung mindestens vier zueinander beabstandete Sensoren (10) aufweist.

9. Einrichtung nach einem der Ansprüche 1 bis 8, **dadurch gekennzeichnet, dass** die Sensoren (10) der Einrichtung ausgebildet sind, die Position des Objekts (12) zu mehreren aufeinander folgenden Zeitpunkten und dadurch eine Bewegung des Objekts (12) zu ermitteln, und entsprechende Sensorsignale zu generieren, und dass die Mittel zur Beeinflussung des ausgesandten Lichtkegels ausgebildet sind, den Lichtkegel der ermittelten Bewegung des Objekts (12) folgen zu lassen.

10. Einrichtung nach einem der Ansprüche 1 bis 9, **dadurch gekennzeichnet, dass** die Sensoren (10) der Einrichtung ausgebildet sind, die Form und/oder Größe des Objekts (12) zu ermitteln und entsprechende Sensorsignale zu generieren, und dass die Mittel zur Beeinflussung des ausgesandten Lichtkegels ausgebildet sind, die Form und/oder Größe des Lichtkegels auf dem ausgeleuchteten Objekt (12) so einzustellen, dass der Lichtkegel das Objekt (12) möglichst exakt ausleuchtet.

11. Einrichtung nach Anspruch 10, **dadurch gekennzeichnet, dass** die Sensoren (10) der Einrichtung ausgebildet sind, die Form und/oder Größe des Objekts zu mehreren aufeinander folgenden Zeitpunkten zu ermitteln und entsprechende Sensorsignale zu generieren, und dass die Mittel zur Beeinflussung des ausgesandten Lichtkegels ausgebildet sind, die Form und/oder Größe des Lichtkegels der ermittelten Form und/oder Größe des Objekts (12) folgen zu lassen.

12. Einrichtung nach einem der Ansprüche 1 bis 11, **dadurch gekennzeichnet, dass** die mindestens eine Lichtquelle (4) der Leuchte (2) ausgebildet ist, je nach Ansteuerung der mindestens einen Lichtquelle (4) Licht unterschiedlicher Intensitäten auszusenden, und dass die Mittel zur Beeinflussung des ausgesandten Lichtkegels in Abhängigkeit von dem mindestens einen Sensorsignal ausgebildet sind, die mindestens eine Lichtquelle (4) anzusteuern, damit sie Licht einer bestimmten Intensität aussendet.

13. Einrichtung nach einem der Ansprüche 1 bis 12,
**dadurch gekennzeichnet, dass** die Leuchte (2) mehrere Lichtquellen (4) aufweist, die ausgebildet sind, zur Bestimmung der Position des Objekts (12) in dem ausleuchtbaren Bereich (14) der Leuchte (2) nacheinander einzeln oder gruppenweise kurzzeitig Licht auszusenden und die Sensoren (10) ausgebildet sind, korreliert zu dem Aussenden des Lichts durch die einzelnen Lichtquellen (4) das von dem Objekt (12) jeweils reflektierte oder gestreute Licht zu erfassen, auszuwerten und entsprechende Sensorsignale zu generieren.

14. Innenraumleuchte (2) für ein Kraftfahrzeug umfassend eine Einrichtung mit einer Leuchte (2) mit mindestens einer Lichtquelle (4) zur Beeinflussung eines
durch die mindestens eine Lichtquelle (4) der Leuchte (2) ausgesandten Lichtkegels, **dadurch gekennzeichnet, dass** die Einrichtung nach einem der Ansprüche 1 bis 13 ausgebildet ist.

## Claims

1. Device comprising a luminaire (2) having at least one light source (4), the device for influencing a light cone emitted by the at least one light source (4) of the luminaire (2) is configured, the device comprising at least one sensor (10) for detecting electromagnetic radiation of at least one light source or radiation source (4, 20) of the device, which radiation is reflected or scattered by an object (12) in a region (14) that can be illuminated by the luminaire (2), and for generating at least one sensor signal on the basis of the detected reflected radiation of the object (12), and means for influencing the emitted light cone on the basis of the at least one sensor signal, the device having a plurality of photodiodes as sensors (10) that are spaced apart from one another, which in each case detect an intensity of the electromagnetic radiation reflected or scattered by the object (12), evaluate it and generate corresponding sensor signals, and the device determining the position of the object (12) by means of triangulation based on the sensor signals of the different sensors (10), **characterized in that** the at least one light source (4) of the luminaire (2) is designed to emit light of different colors, depending on the control of the at least one light source (4), and **in that** the means for influencing the emitted light cone on the basis of the at least one sensor signal are designed to control at least one light source (4) so that it emits light of a specific color, the device being configured to illuminate the detected object (12) with white light and to illuminate the surroundings with less powerful red or yellow light.

2. Device according to claim 1, **characterized in that** at least one light source (4) for emitting light in a wavelength range visible to the human eye is assigned to the device as the at least one light source or radiation source (4, 20), the at least one light source (4) emitting light in the region (14) that can be illuminated by the luminaire (2), and each of the sensors (10) being designed to detect the visible light reflected or scattered by the object (12), to determine the intensity of the detected light, evaluate it and to thus generate the corresponding sensor signals.

3. Device according to claim 2, **characterized in that** the at least one light source (4) assigned to the device is part of the luminaire (2) and emits at least one portion (16) of the light cone of the luminaire (2) in the region (14) that can be illuminated by the luminaire (2).

4. Device according to claim 3, **characterized in that** during its illumination mode, in which it generates at least one portion (16) of the light cone of the luminaire (2), the at least one light source (4) assigned to the device can be operated at certain points in time for a short period of time in a sensor mode in which it emits light pulses at a frequency that is not perceptible to the human eye, and **in that** the sensors (10) are designed to detect the intensity of the light pulses reflected or scattered by the object (12), evaluate it, assign it to the emitting light source (4), and thus to generate the corresponding sensor signals.

5. Device according to claim 1, **characterized in that** the device has at least one radiation source (20) for emitting electromagnetic radiation in a wavelength range invisible to the human eye as the at least one light source or radiation source (4, 20), the at least one radiation source (20) emitting the radiation in the region (14) that can be illuminated by the luminaire (2), and each of the sensors (10) being designed to detect the invisible radiation reflected or scattered by the object (12), to determine the intensity of the detected radiation, evaluate it and thus to generate the corresponding sensor signals.

6. Device according to claim 5, **characterized in that** the at least one radiation source (20) is designed to emit IR or UV radiation.

7. Device according to any of claims 1 to 6, **characterized in that** the device has at least three sensors (10) spaced apart from one another.

8. Device according to any of claims 1 to 6, **characterized in that** the device has at least four sensors (10) spaced apart from one another.

9. Device according to any of claims 1 to 8, **characterized in that** the sensors (10) of the device are designed to determine the position of the object (12) at a plurality of successive points in time and thereby determine a movement of the object (12), and to generate corresponding sensor signals, and **in that** the means for influencing the emitted light cone are designed to allow the light cone to follow the determined movement of the object (12).

10. Device according to any of claims 1 to 9, **characterized in that** the sensors (10) of the device are designed to determine the shape and/or size of the object (12) and to generate corresponding sensor signals, and **in that** the means for influencing the emitted light cone are designed to adjust the shape and/or size of the light cone on the illuminated object (12) such that the light cone illuminates the object (12) as precisely as possible.

11. Device according to claim 10, **characterized in that** the sensors (10) of the device are designed to determine the shape and/or size of the object at a plurality of successive points in time and to generate corresponding sensor signals, and **in that** the means for influencing the emitted light cone are designed to allow the shape and/or size of the light cone to follow the determined shape and/or size of the object (12).

12. Device according to any of claims 1 to 11, **characterized in that** the at least one light source (4) of the luminaire (2) is designed to emit light of different intensities, depending on the control of the at least one light source (4), and **in that** the means for influencing the emitted light cone on the basis of the at least one sensor signal are designed to control the at least one light source (4) so that it emits light of a certain intensity.

13. Device according to any of claims 1 to 12, **characterized in that** the luminaire (2) has a plurality of light sources (4) which are designed to briefly emit light, individually or in groups, in order to determine the position of the object (12) in the region (14) of the luminaire (2) that can be illuminated, and the sensors (10) are designed, correlated to the emission of the light by the individual light sources (4), to detect the light reflected or scattered by the object (12) in each case and generate corresponding sensor signals.

14. Interior luminaire (2) for a motor vehicle comprising a device having a luminaire (2) having at least one light source (4) for influencing a light cone emitted by the at least one light source (4) of the luminaire (2), **characterized in that** the device is designed according to any of claims 1 to 13.

## Revendications

1. Dispositif avec une lampe (2) avec au moins une source lumineuse (4), dans lequel le dispositif est conçu pour influencer un cône de lumière émis par l'au moins une source lumineuse (4) de la lampe (2), le dispositif comprenant au moins un capteur (10) pour détecter un rayonnement électromagnétique réfléchi ou diffusé par un objet (12) dans une zone (14) pouvant être éclairée par la lampe (2) d'au moins une source lumineuse ou de rayonnement (4, 20) du dispositif et pour générer au moins un signal de capteur en fonction du rayonnement réfléchi détecté de l'objet (12), et des moyens pour influencer le cône de lumière émis en fonction du au moins un signal de capteur, dans lequel le dispositif présente plusieurs photodiodes espacées les unes des autres en tant que capteurs (10), lesquelles détectent, évaluent respectivement une intensité du rayonnement électromagnétique réfléchi ou diffusé par l'objet (12), et génèrent des signaux de capteur correspondants, et dans lequel le dispositif détermine la position de l'objet (12) au moyen d'une triangulation à l'aide des signaux de capteur des différents capteurs (10), **caractérisé en ce que** l'au moins une source lumineuse (4) de la lampe (2) est réalisée pour émettre de la lumière de différentes couleurs selon la commande de l'au moins une source lumineuse (4), et **en ce que** les moyens pour influencer le cône de lumière en fonction de l'au moins un signal de capteur sont réalisés pour commander l'au moins une source lumineuse (4), afin qu'elle émette de la lumière d'une couleur définie, dans lequel le dispositif est conçu pour éclairer l'objet (12) détecté avec une lumière blanche et pour éclairer l'environnement avec une lumière rouge ou jaune moins intense.

2. Dispositif selon la revendication 1, **caractérisé en ce qu'**au moins une source lumineuse (4) pour émettre de la lumière dans une gamme de longueurs d'onde visible pour l'oeil humain est associée au dispositif en tant que l'au moins une source lumineuse ou de rayonnement (4, 20), dans lequel l'au moins une source lumineuse (4) émet de la lumière dans la zone (14) pouvant être éclairée par la lampe (2), et chacun des capteurs (10) est réalisé pour détecter la lumière visible réfléchie ou diffusée par l'objet (12), pour déterminer, évaluer l'intensité de la lumière détectée, et pour générer ainsi les signaux de capteur correspondants.

3. Dispositif selon la revendication 2, **caractérisé en ce que** l'au moins une source lumineuse (4) associée au dispositif fait partie de la lampe (2) et émet au moins une partie (16) du cône de lumière de la lampe (2) dans la zone (14) pouvant être éclairée par la lampe (2).

4. Dispositif selon la revendication 3, **caractérisé en ce que** l'au moins une source lumineuse (4) associée au dispositif peut être exploitée dans un mode de détection pendant une courte durée à des moments déterminés pendant son mode d'éclairage, dans lequel elle produit au moins une partie (16) du cône de lumière de la lampe (2), dans lequel elle émet des impulsions lumineuses à une fréquence non perceptible par l'œil humain, et **en ce que** les capteurs (10) sont réalisés pour détecter, évaluer l'intensité des impulsions lumineuses réfléchies ou diffusées par l'objet (12), les associer à la source lumineuse (4) émettrice et générer ainsi les signaux de capteur correspondants.

5. Dispositif selon la revendication 1, **caractérisé en ce que** le dispositif présente au moins une source de rayonnement (20) pour émettre un rayonnement électromagnétique dans une gamme de longueurs d'onde invisible pour l'oeil humain en tant que l'au moins une source lumineuse ou de rayonnement (4, 20), dans lequel l'au moins une source de rayonnement (20) émet le rayonnement dans la zone (14) pouvant être éclairée par la lampe (2), et chacun des capteurs (10) est réalisé pour détecter le rayonnement invisible réfléchi ou diffusé par l'objet (12), pour déterminer, évaluer l'intensité du rayonnement détecté, et pour générer ainsi les signaux de capteur correspondants.

6. Dispositif selon la revendication 5, **caractérisé en ce que** l'au moins une source de rayonnement (20) est réalisée pour émettre un rayonnement IR ou UV.

7. Dispositif selon l'une quelconque des revendications 1 à 6, **caractérisé en ce que** le dispositif présente au moins trois capteurs (10) espacés les uns des autres.

8. Dispositif selon l'une quelconque des revendications 1 à 6, **caractérisé en ce que** le dispositif présente au moins quatre capteurs (10) espacés les uns des autres.

9. Dispositif selon l'une quelconque des revendications 1 à 8, **caractérisé en ce que** les capteurs (10) du dispositif sont réalisés pour déterminer la position de l'objet (12) à plusieurs moments successifs et ainsi un mouvement de l'objet (12), et pour générer des signaux de capteur correspondants, et **en ce que** les moyens pour influencer le cône de lumière émis sont réalisés pour faire suivre au cône de lumière le mouvement déterminé de l'objet (12).

10. Dispositif selon l'une quelconque des revendications 1 à 9, **caractérisé en ce que** les capteurs (10) du dispositif sont réalisés pour déterminer la forme et/ou la taille de l'objet (12) et pour générer des signaux de capteur correspondants, et **en ce que** les moyens pour influencer le cône de lumière émis sont réalisés pour régler la forme et/ou la taille du cône de lumière sur l'objet (12) éclairé de telle sorte que le cône de lumière éclaire l'objet (12) le plus précisément possible.

11. Dispositif selon la revendication 10, **caractérisé en ce que** les capteurs (10) du dispositif sont réalisés pour déterminer la forme et/ou la taille de l'objet à plusieurs moments successifs et pour générer des signaux de capteur correspondants, et **en ce que** les moyens pour influencer le cône de lumière émis sont réalisés pour faire suivre la forme et/ou la taille du cône de lumière à la forme et/ou à la taille déterminée de l'objet (12).

12. Dispositif selon l'une quelconque des revendications 1 à 11, **caractérisé en ce que** l'au moins une source lumineuse (4) de la lampe (2) est réalisée pour émettre de la lumière d'intensités différentes selon la commande de l'au moins une source lumineuse (4), et **en ce que** les moyens pour influencer le cône de lumière émis en fonction de l'au moins un signal de capteur sont réalisés pour commander l'au moins une source lumineuse (4) afin qu'elle émette de la lumière d'une intensité déterminée.

13. Dispositif selon l'une quelconque des revendications 1 à 12, **caractérisé en ce que** la lampe (2) présente plusieurs sources lumineuses (4), qui sont réalisées pour émettre brièvement de la lumière, individuellement ou par groupes, les unes après les autres, pour déterminer la position de l'objet (12) dans la zone (14) pouvant être éclairée de la lampe (2), et les capteurs (10) sont réalisés pour détecter, évaluer en corrélation avec l'émission de la lumière par les sources lumineuses (4) individuelles, la lumière respectivement réfléchie ou diffusée par l'objet (12), et pour générer les signaux de capteur correspondants.

14. Lampe d'habitacle (2) pour un véhicule automobile comprenant un dispositif avec une lampe (2) avec au moins une source lumineuse (4) pour influencer un cône de lumière émis par l'au moins une source lumineuse (4) de la lampe (2), **caractérisée en ce que** le dispositif est réalisé selon l'une quelconque des revendications 1 à 13.
